Europäisches Patentamt

European Patent Office

Office européen des brevets

(11) Veröffentlichungsnummer: **0 179 262**
**B1**

(12) **EUROPÄISCHE PATENTSCHRIFT**

(45) Veröffentlichungstag der Patentschrifft:
07.02.90

(51) Int. Cl. 5: **H 02 H 3/05,** H 02 H 7/122

(21) Anmeldenummer: **85111642.6**

(22) Anmeldetag: **14.09.85**

(54) Fehlerschutzverfahren und -schaltung.

(30) Priorität: **03.10.84 CH 4746/84**

(43) Veröffentlichungstag der Anmeldung:
**30.04.86 Patentblatt 86/18**

(45) Bekanntmachung des Hinweises auf die Patenterteilung:
**07.02.90 Patentblatt 90/06**

(84) Bennante Vertragsstaaten:
**AT CH DE IT LI SE**

(56) Entgegenhaltungen:
**FR-A-2 511 204**
**GB-A-2 036 477**
**US-A-2 575 925**
**US-A-3 916 287**
**US-A-4 475 150**

(73) Patentinhaber: **BBC Brown Boveri AG**
**Haselstrasse**
**CH-5401 Baden (CH)**

(72) Erfinder: **Skarpetowski, Grzegorz, Dr.**
**Alte Poststrasse 8**
**CH-5417 Untersiggenthal (CH)**

EP 0 179 262 B1

**Beschreibung**

Bei der Erfindung wird ausgegangen von einem Fehlerschutzverfahren nach dem Oberbegriff des Patentanspruchs 1. Die Erfindung betrifft auch eine Fehlerschutzschaltung zur Durchführung des Fehlerschutzverfahrens.

Mit dem Oberbegriff nimmt die Erfindung auf einen Stand der Technik von Fehlerschutzverfahren Bezug, wie er in der US-A-2 575 925 beschrieben ist. Dort ist in der Speiseleitung eines Generators ein Schutzschalter vorgesehen, der von einem Ueberstromrelais geöffnet werden kann. Dieser Schutzschalter, dessen Überstrom-Auslösecharakteristik umgekehrt proportional zur Generatorspannung ist, wird durch ein Gerät zur Erfassung eines Spannungsgleichgewichts gegen ungewollte Auslösung durch fehlerhafte Spannungserfassung geschützt. Dazu erzeugt ein 1. Spannungsmessgerät je ein 1. Messwertsignal der Generator-Aussenleiterspannungen. Diese Messwertsignale dienen einerseits dazu, einem Relais eine spannungsabhängige Auslösecharakteristik zu geben. Das Relais wirkt daher als Vergleicher für jede der Generatorspannungen, der bei Überschreiten eines bestimmten Grenzwertes ein Abschaltsignal für den Schutzschalter erzeugt. Andererseits werden diese Messwertsignale dem Gerät zur Erfassung eines Spannungsgleichgewichts zugeführt und erzeugen in 3 Statorwicklungen einen resultierenden Drehfluss, der einem Rotor ein Drehmoment erteilt. Ein 2. Spannungsmessgerät ist für eine redundante Erfassung derselben Messgrösse vorgesehen und erzeugt, solange der Schutzschalter geschlossen ist, ein Vergleichsmesswertsignal in weiteren Statorwicklungen des Geräts. Diese Wicklungen sind so angeordnet, dass ein resultierender Drehfluss entsteht, der dem erstgenannten Drehfluss entgegenwirkt, so dass sich, bei übereinstimmender Spannungserfassung, die beiden auf den Rotor wirkenden Drehmomente gegenseitig aufheben und der Rotor in der durch Federn bestimmten Ruhelage verbleibt. Überschreitet die Differenz der durch das 1. Messgerät und das 2. Messgerät erfassten Spannungen einen bestimmten Grenzwert, so reicht der dadurch in den Statorwicklungen erzeugte Drehfluss aus, um den Rotor gegen die Kraft der Feder soweit zu verdrehen, dass durch ein mit dem Rotor verbundenes Schaltglied Kontakte geschlossen werden. Dadurch wird einerseits ein Fehlersignal (Alarmglocke) erzeugt und andererseits ein Auslösen des Schutzschalters verhindert.

Dieses Überwachungsgerät ist hardwaremässig aufwendig; es ermöglicht keine Unterscheidung zwischen kleineren und grösseren Messwertabweichungen und kann nur zeitkontinuierlich betrieben werden.

Aus der US-A-4 475 150 sind ein Fehlerschutzverfahren und eine -schaltung für einen Synchronmotor bekannt, der über einen Umrichter mit netzkommutierten Stromrichtern mit einem Gleichstromzwischenkreis gespeist ist. Im Gleichstromzwischenkreis sind keine Stromwandler, sondern nur Spannungswandler vorgesehen. Strom- und Spannungsmessgeräte werden je für sich auf Grenzwertüberschreitungen überwacht. Die Messgeräte stehen ausgangsseitig über eine Logikschaltung mit Vergleichseinrichtung miteinander in Wirkverbindung, wobei in Abhängigkeit vom Auftreten eines Fehlersignals die Zündsignale für die Stromrichterthyristoren blockierbar sind. Die Stromrichterschaltzustände werden durch Vergleiche der 3 Phasenspannungen erfasst.

Aus der CH-PS-556 103 ist es bekannt, bei einem von einem Gleichspannungszwischenkreis gespeisten, selbstgeführten Wechselrichter beim Auftreten eines Überstromes in einem Ventilzweig des Wechselrichters alle Wechselrichterventile gleichzeitig mit einem Zündimpuls zu beaufschlagen.

Der vom Gleichstromwandler oder von Stromerfassungsspulen in den Zuleitungen des Stromrichters ermittelte Strom wird in einem Vergleicher mit einem Grenzwert verglichen. In Abhängigkeit von einer Grenzwertüberschreitung werden über ein Zündimpuls-Steuergerät die Stromrichterventile gezündet und die Stromzufuhr zu den Stromrichtern unterbrochen. Eine Anzeigeeinrichtung zeigt an, welcher Wechselrichterbrückenzweig fehlerhaft durchgezündet hat. Nachteilig dabei ist, dass weder die Stromistwerterfassung für die Regelung des Laststromes noch die Stromistwerterfassung für die Schutzeinrichtung des Stromrichters redundant ausgelegt noch miteinander logisch verknüpft sind. Zwischen den beiden Schaltkreisen besteht kein Informationsaustausch. Die einwandfreie Funktion der Schutzeinrichtung muss periodisch, z. B. bei Schienenfahrzeugantrieben etwa alle 2 Wochen, geprüft werden. Etwa in der Stromistwerterfassungsstrecke auftretende Störungen werden dabei zu spät erkannt und können zu Zerstörungen von Stromrichtern führen.

Die Erfindung, wie sie in den Patentansprüchen 1 und 6 definiert ist, löst die Aufgabe, die Sicherheit bei der Erfassung einer Messgrösse mit einfachen Mitteln zu erhöhen und die Ausfallsicherheit von Anlagen und Einrichtungen mit Messgeräten zu verbessern.

Ein Vorteil der Erfindung besteht in der verbesserten Zuverlässigkeit von Messwerterfassungsschaltungen und geringeren Schäden bei auftretenden Störungen in einem Istwerterfassungskreis. Aufgrund der erzielten Redundanz der Messwerterfassung muss eine Störung in einem Istwerterfassungskreis nicht direkt zu einem Ausfall der ganzen Anlage führen. Der Fehler kann angezeigt und die Anlage abgestellt werden, bevor es zu einer Beschädigung kommt.

Ein Vorteil gemäss einer vorteilhaften Ausgestaltung der Erfindung besteht darin, dass in Fällen, in denen dieselbe Messgrösse einmal für Schutzzwecke und ein zweites Mal für Steuer- und/oder Regelzwecke erfasst wird, keine zusätzliche Messwerterfassung erforderlich ist, um Redundanz zu erzielen. Die beiden Messwerte können mittels eines Plausibilitätstestes vergli-

werden. Dieser Plausibilitätstest kann sowohl von einem Rechner als auch mittels einer Hardwareschaltung durchgeführt werden. Dabei kann es ausreichend sein, wenn der Messwertvergleich nur in gewissen Zeitintervallen durchgeführt wird, in denen die Istwerte der überwachten Messgrösse übereinstimmen sollten. Bei Stromrichtern mit mehreren Betriebszuständen können ausser diesen auch Totzeiten berücksichtigt werden, während denen nicht mit einer Messwertübereinstimmung zu rechnen ist.

Die Erfindung wird nachstehend anhand von Ausführungsbeispielen erläutert. Es zeigen:

Fig. 1    eine 3-phasige Umrichterschaltung mit Gleichspannungszwischenkreis mit schematisch dargestellten Fehlerschutzschaltungen für den Gleichrichterteil, den Gleichspannungszwischenkreis und den Wechselrichterteil,

Fig. 2    ein Blockschaltbild einer Fehlerschutzschaltung gemäss Fig. 1,

Fig. 3    ein Prinzipschaltbild einer Stromschutzschaltung in der Fehlerschutzschaltung gemäss Fig. 2,

Fig. 4    ein Blockschaltbild einer Logikschaltung in der Fehlerschutzschaltung gemäss Fig. 2,

Fig. 5a   ein Blockschaltbild einer Verzögerungsschaltung der Logikschaltung gemäss Fig. 4,

Fig. 5b   und 5c Signal-Zeitdiagramme der Verzögerungsschaltung gemäss Fig. 5a,

Fig. 6a   bis 6h Betriebszustände einer Stromrichterschaltung gemäss Fig. 2,

Fig. 7    ein Strom-Zeitdiagramm zu zwei Betriebszuständen gemäss Fig. 6a und 6b und

Fig. 8    ein Flussdiagramm der Durchführung eines Plausibilitätstestes bei einer Fehlerschutzschaltung gemäss Fig. 2.

Der Einfachheit halber werden nachfolgend für "Signale" und "Signalleitungen" dieselben Bezeichnungen verwendet.

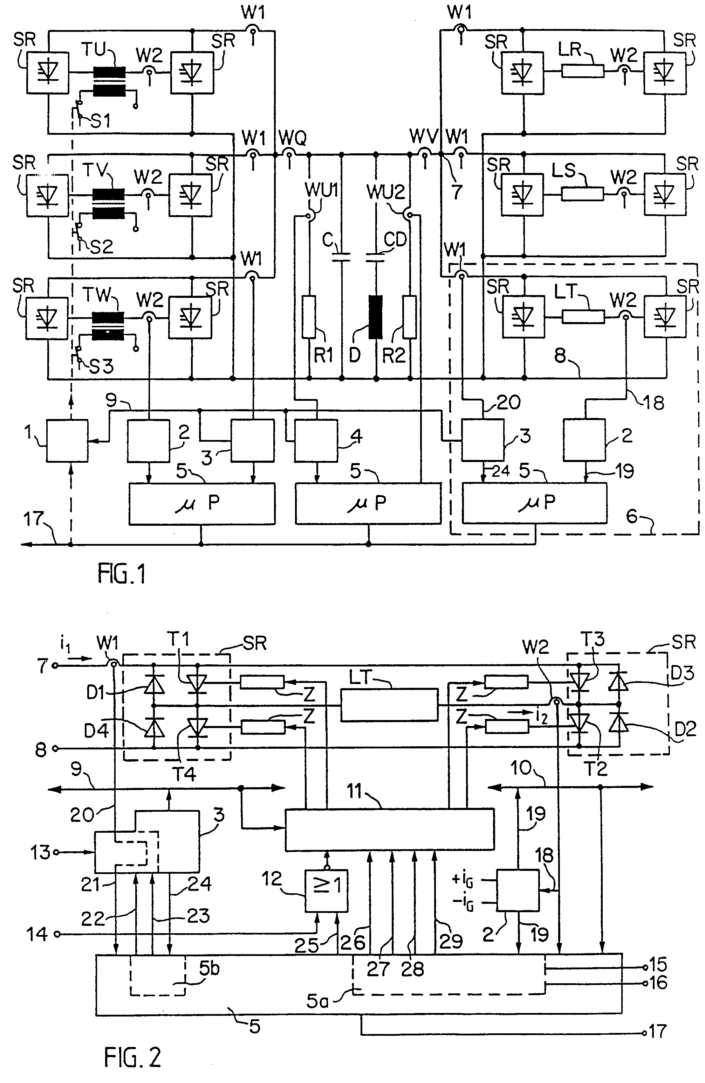

Bei der in Fig. 1 dargestellten 3-phasigen Umrichterschaltung sind je Wechselstromphase 2 Stromrichter SR vorgesehen, deren Wechselstromeingänge von Speisetransformator-Sekundärwicklungen TU, TV, TW gespeist sind. Die Primärwicklungen des Speisetransformators sind über von einer Schalteinrichtung 1 gesteuerte Schaltkontakte oder elektronische Schalter S1, S2, S3 an ein Wechselstromnetz angeschlossen. Der den Stromrichtern SR eingangsseitig zugeführte Wechselstrom wird jeweils von einem Stromwandler W2 erfasst und dessen Ausgangssignal einer Momentanstrombegrenzerschaltung bzw. einem Fensterkomparator 2 zugeführt, wie er z. B. aus dem deutschen Buch U. Tietze, Ch. Schenk, Halbleiter-Schaltungstechnik, 5. Aufl., Springer-Verlag Berlin, Heidelberg, New York 1980, S. 413, bekannt ist. Der Fensterkomparator 2 erzeugt während der Dauer einer Überschreitung eines vorgebbaren Stromgrenzwertes ± $i_G$

ein Stromgrenzwert-Überschreitungssignal 19 und stellt es ausgangsseitig einer Logikschaltung oder einem Rechner bzw. Mikroprozessor 5 zur Verfügung.

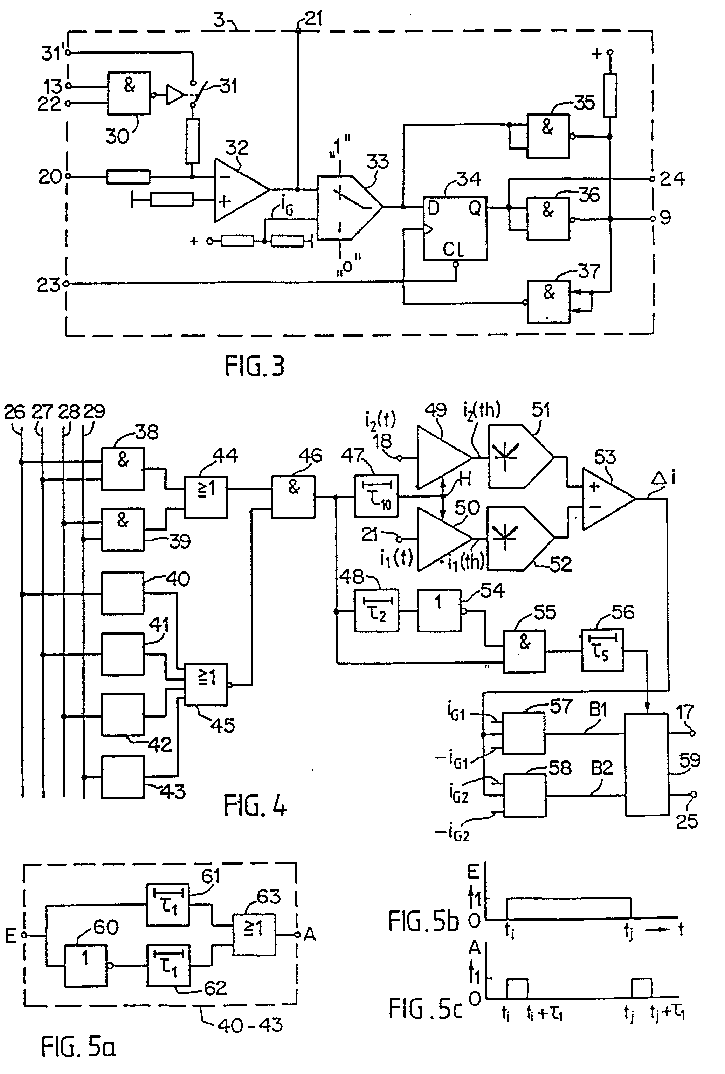

Der den Stromrichtern SR ausgangsseitig entnommene Strom wird jeweils von einem Gleichstromwandler W1 erfasst und dessen Ausgangssignal einer Stromschutzschaltung 3 gemäss Fig. 3 zugeführt. Die Stromschutzschaltung 3 liefert in Abhängigkeit von einer Grenzwertüberschreitung über eine Schutz-Sammelschiene 9 ein Ausschaltsignal an die Schalteinrichtung 1, welche eine Öffnung der Schalter S1, S2, S3 bewirkt. Gleichzeitig steht die Stromschutzschaltung 3 ausgangsseitig mit der Logikschaltung 5 in Verbindung und ruft eine allgemeine Durchzündung des Stromrichters hervor.

Jeweils die positiven und negativen Gleichstromeingänge der 3-Phasen-Gleichrichter sind in einem Schaltungspunkt zusammengeführt. Hinter dem Schaltungspunkt der positiven Ausgänge sind zwei Stromwandler bzw. Summenstromwandler WQ und WV vorgesehen. Zwischen eine positive und negative Klemme 7 bzw. 8 des Gleichspannungszwischenkreises sind ein Zwischenkreiskondensator C und ein Oberschwingungssaugkreis aus einer Reihenschaltung einer Drossel D und eines Saugkreiskondensators CD geschaltet, Die Gleichspannung des Gleichspannungszwischenkreises wird redundant mittels zu Widerständen R1 bzw. R2 in Reihe geschalteten Gleichstromwandlern WU1 bzw. WU2 erfasst. Das Ausgangssignal des Wandlers WU1 ist einer Spannungs-Schutzschaltung 4 zugeführt, die in Abhängigkeit von einer Grenzwertüberschreitung der erfassten Spannung über die Schutz-Sammelschiene 9 ein Ausschaltsignal an die Schalteinrichtung 1 liefert und andererseits mit einer Logikschaltung oder einem Rechner bzw. Mikroprozessor 5 in Wirkverbindung steht und die Durchzündung aller Stromrichterzweige bewirkt. Das Ausgangssignal des Wandlers WU2 ist, erforderlichenfalls nach einer nicht dargestellten Analog/Digital-Umwandlung, direkt der Logikschaltung 5 zugeführt.

Der in Fig. 1 oben rechts dargestellte Wechselrichterteil mit 2 Stromrichtern SR je Wechselstromphase und je einer Last bzw. einem Widerstand oder einem Stromverbraucher LR, LS und LT (z. B. den Statorwicklungen einer Wechselstrommaschine) im Wechselstromausgang der Stromrichter SR ist analog dem Gleichrichterteil des Umrichters aufgebaut. Der den beiden Stromrichtern SR jeder Wechselstromphase eingangsseitig zufliessende Wechselstrom wird je von einem Gleichstromwandler W1 erfasst. Der ausgangsseitige Wechselstrom wird jeweils von Wechselstromwandlern W2 erfasst, die zu den Stromverbrauchern LR bzw. LS bzw. LT in Reihe geschaltet sind. Die Ausgangssignale der Stromwandler W1 sind jeweils einer Stromschutzschaltung 3 zugeführt und die Ausgangssignale der Stromwandler W2 Fensterkomparatoren 2, die beide mit der Logikschaltung 5 in Verbindung stehen.

5

Aus Gründen einer besseren Übersichtlichkeit sind in Fig. 1 die Anschlüsse der Wandlerausgänge über die Stromschutzschaltung 3 und den Fensterkomparator 2 an die Logikschaltung 5 beim Gleichrichter- und Wechselrichterteil des Umrichters jeweils nur für eine Wechselstromphase im Prinzip dargestellt.

Ein mit 6 bezeichneter, in Fig. 1 gestrichelt dargestellter Schaltungsteil ist in Fig. 2 als Blockschaltbild mehr im Detail dargestellt. Jeder der beiden Stromrichter SR ist als Brücke ausgebildet. Der linke Stromrichter SR weist in Reihe geschaltete Ventile, vorzugsweise ausschaltbare GTO-Thyristoren T1 und T4 auf, zu denen Dioden D1 bzw. D4 antiparallel geschaltet sind. Der rechte Stromrichter SR weist in Reihe geschaltete Ventile bzw. ausschaltbare Thyristoren T3 und T2 auf, zu denen Dioden D3 bzw. D2 antiparallel geschaltet sind. Die Thyristoren T1 - T4 werden von einer Steuersignalsendestufe 11 über Zünd- und Löschsignalerzeuger Z in bekannter Weise gezündet.

Der Gleichstromwandler W1 erfasst einen von den beiden Stromrichtern SR aufgenommenen Gleichstrom i₁ und liefert ausgangsseitig ein Schutz-Stromistwertsignal 20 an die Stromschutzschaltung 3, die ausgangsseitig ein invertiertes Schutz-Stromistwertsignal 21 an die Logikschaltung 5 liefert.

Der Stromwandler W2 erfasst einen vom Stromverbraucher LT aufgenommenen Wechselstrom 2 und liefert ausgangsseitig ein Verbraucher-Stromistwertsignal 18 an den Fensterkomparator 2 und an die Logikschaltung 5. Das vom Fensterkomparator 2 ggf. erzeugte Stromgrenzwertüberschreitungssignal 19, wird der Logikschaltung 5 und, falls als Logikschaltung 5 ein Mikroprozessor verwendet wird, auch einer Momentanstrombegrenzungs-Sammelschiene 10 zugeführt, an die alle anderen Fensterkomparatoren 2 angeschlossen sind.

Die Logikschaltung 5 weist eine z. B. aus IEEE Transactions on Industry Applications, Vol. IA - 19, No. 2, 1983, S. 235 - 243 bekannte Regelelektronik 5a zur Erzeugung von Zündimpulsen 26 - 29 für die Thyristoren T1 - T4 auf, welche der Steuersignalsendestufe 11 zugeführt werden. Eingangsseitig ist der Regelelektronik 5a ein Stromsollwertsignal 15 und ein Frequenzsollwertsignal 16 zugeführt. Die Steuersignalsendestufe 11 ist eingangsseitig ferner mit der Schutz-Sammelschiene 9 und mit dem Ausgang eines NOR-Gliedes 12 verbunden. Das NOR-Glied 12 erhält eingangsseitig ein von einer übergeordneten, nicht dargestellten Steuerebene geliefertes Freigabesignal 14 für Zündimpulse und von der Logikschaltung 5 ein Löschfreigabesignal bzw. Abschaltsignal 25. Die Logikschaltung 5 weist ferner einen Anzeige-Quittungssignalerzeuger 5b auf, der ein Testsignal 22 und ein Löschsignal 23 an die Stromschutzschaltung 3 liefert und von dieser ein Speicherausgangssignal 24 erhält. Ausgangsseitig liefert die Logikschaltung ein Fehlersignal 17, das zur Markierung oder Anzeige eines Fehlers im betroffenen Messwerterfas-

6

sungskanal an eine übergeordnete, nicht dargestellte Schalter- und Anzeigevorrichtung geliefert wird. Das Fehlersignal 17 kann auch zur Abschaltung der Anlage über die Schalteinrichtung 1 (gestrichelte Linie in Fig. 1) verwendet werden.

Die Stromschutzschaltung 3 ist näher in Fig. 3 dargestellt. Dem invertierenden Eingang eines Summiergliedes 32 ist über einen Widerstand das Schutz-Stromistwertsignal 20 zugeführt und dessen nichtinvertierendem Eingang über einen weiteren Widerstand Massepotential. Der invertierende Eingang des Summiergliedes 32 steht über einen Vorwiderstand und einen Schalter 31 in Schliessposition mit einem Vergleicher-Testsignal 31' in Verbindung. Der Schalter 31 erhält den Schliessbefehl über ein NAND-Glied 30 in Abhängigkeit von einem Testerlaubnissignal 13 und dem Testsignal 22. Am Ausgang des Summiergliedes 32 ist das invertierte Schutz-Stromistwertsignal 21 abgreifbar, das der Logikschaltung 5 und einem Eingang eines Vergleichers 33 zugeführt ist. Einem anderen Eingang des Vergleichers 33 ist ein Stromgrenzwertsignal i_G zugeführt. Ist das invertierte Schutz-Stromistwertsignal 21 betragsmässig grösser als dieses Stromgrenzwertsignal i_G, so ist das Ausgangssignal des Vergleichers 33 auf logisch "1", andernfalls auf logisch "0". Dieses Ausgangssignal ist dem D-Eingang eines flankengetriggerten D-Kippgliedes 34 und beiden Eingängen eines NAND-Gliedes 35 zugeführt, dessen Ausgang an die Schutz-Sammelschiene 9 angeschlossen ist und über einen Vorwiderstand mit "+"-Potential in Verbindung steht. Durch ein "1"-Signal am Ausgang des Vergleichers 33 wird das Potential der Schutz-Sammelschiene 9 für alle angeschlossenen Strom-Schutzschaltungen 3 auf logisch "0" gebracht. Der Takteingang des D-Kippgliedes 34 ist mit dem Ausgang eines NAND-Gliedes 37 verbunden, dessen beide Eingänge an die Schutz-Sammelschiene 9 angeschlossen sind. Sobald an der Schutz-Sammelschiene das Signal "0" erscheint, wird das am D-Eingang des D-Kippgliedes 34 anstehende "1"-Signal gespeichert und an dessen 0-Ausgang abgreifbar. Dieser Q-Ausgang ist mit beiden Eingängen eines NAND-Gliedes 36 verbunden, dessen Ausgang an die Schutz-Sammelschiene 9 angeschlossen ist und bei einem "1"-Signal am Q-Ausgang die Schutz-Sammelschiene so lange auf logisch "0" hält, bis auf einen Löscheingang C1 des D-Kippgliedes 34 ein Löschsignal 23 gegeben wird.

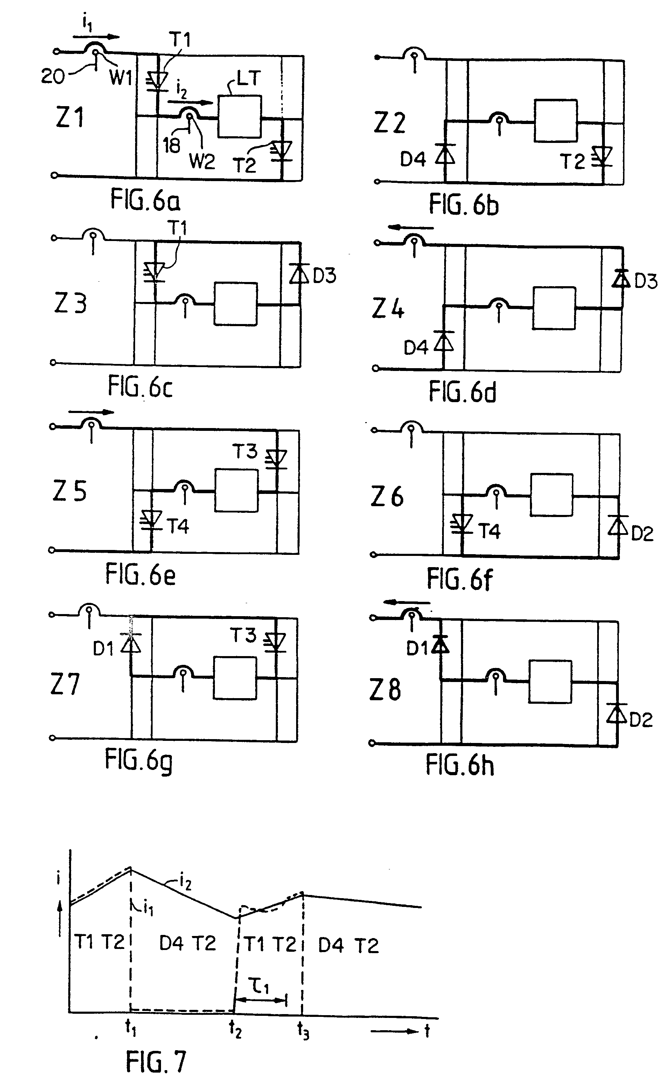

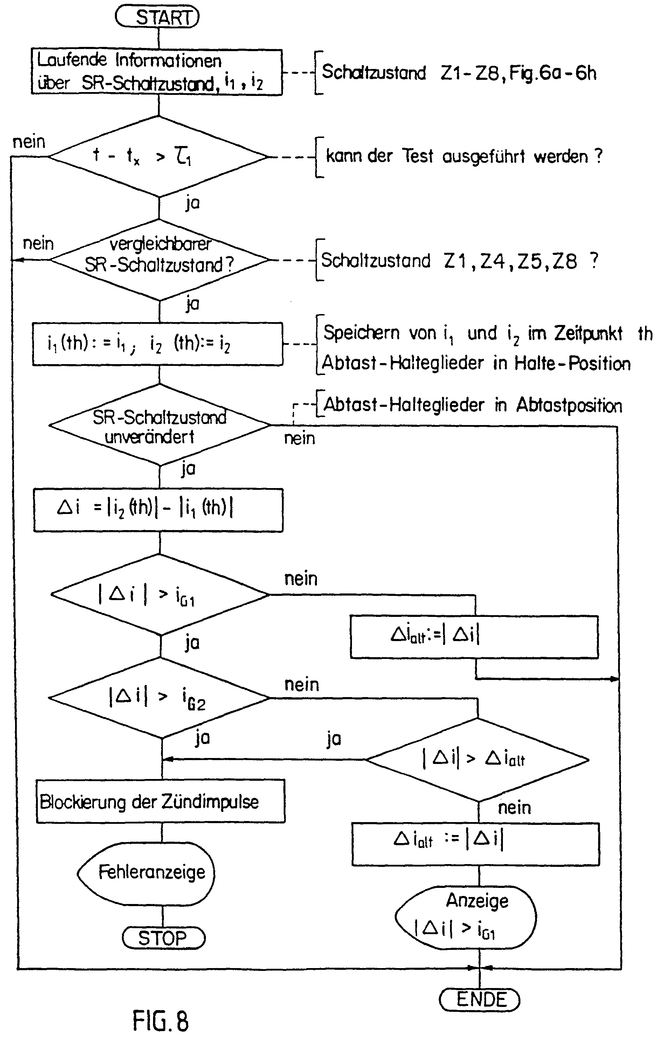

Fig. 4 zeigt ein Blockschaltbild einer Logikschaltung 5 ohne Regelelektronik 5a für die Erzeugung von Zündimpulsen und ohne Anzeige-Quittungssignalerzeuger 5b. Ein UND-Glied 38 ist eingangsseitig an Zündimpulssignalleitungen 26 und 27 und ausgangsseitig an einen Eingang eines ODER-Gliedes 44 angeschlossen. Ein zweites UND-Glied 39 ist eingangsseitig an Zündimpulssignalleitungen 28 und 29 und ausgangsseitig an einen zweiten Eingang des ODER-Gliedes 44 angeschlossen. Am Ausgang des ODER-Gliedes 44 liegt immer dann ein "1"-Signal an, wenn ein gültiger, d. h. ein vergleichbarer Stromrichter-Schaltzustand Z1 oder Z4 oder Z5 oder Z8, vergleiche Fig. 6a, 6d, 6e und 6h, vorliegt.

Ferner steht je eine näher in Fig. 5a dargestellte Verzögerungsschaltung 40 - 43 mit einer vorgebbaren Verzögerungszeitdauer $\tau_1$ im Bereich von 100 µs - 300 µs, vorzugsweise von 130 µs eingangsseitig mit je einer Zündimpulssignalleitung 26 - 29 und ausgangsseitig mit einem Eingang eines NOR-Gliedes 45 in Verbindung. Die Verzögerungszeitdauer $\tau_1$ ist so gewählt, dass schaltungsbedingte Einschwingvorgänge nach einer Stromrichterzustandsänderung abgeklungen sind, vgl. Fig. 7. Die Ausgänge des ODER-Gliedes 44 und des NOR-Gliedes 45 sind mit Eingängen eines UND-Gliedes 46 verbunden. Ausgangsseitig liegt am UND-Glied 46 nur dann ein "1"-Signal an, wenn ein vergleichbarer Stromrichterzustand vorliegt und nach einer Stromrichter-Zustandsänderung eine vorgebbare Zeitdauer $\tau_1$ verstrichen ist.

Ein monostabiles Flip-Flop 47 mit einer vorgebbaren Einschaltzeitdauer $\tau_{10}$ im Bereich von 100 µs - 300 µs, vorzugsweise von 200 µs, ist eingangsseitig mit dem Ausgang des UND-Gliedes 46 und ausgangsseitig (Haltesignal H von 200 µs Dauer) mit je einem Halte-Eingang des Analogspeichers bzw. Abtast-Haltegliedes (Sample and Hold-Glied) 49 und 50 verbunden. Derartige Abtast-Halteglieder sind z. B. aus dem o.g. Buch von Tietze/Schenk, S. 407 - 410, bekannt. Dem Abtast-Eingang des Abtast-Haltegliedes 49 ist das aktuelle Verbraucher-Stromistwert signal 18 bzw. $i_2(t)$ zugeführt und dem Abtast-Eingang des Abtast-Haltegliedes 50 das aktuelle Schutz-Stromistwertsignal 21 bzw. $i_1(t)$. Ausgangsseitig sind die Abtast-Halteglieder 49 und 50 über je ein Betragsglied 51 bzw. 52 mit einem nicht invertierenden bzw. invertierenden Eingang eines Summiergliedes 53 verbunden. Am Eingang des Summiergliedes 53 liegen während der Einschaltzeitdauer $\tau_{10}$ die Stromistwertsignale $i_2(th)$ und $i_1(th)$ im Zeitpunkt th des Eintreffens des Haltesignals H an den Abtasthaltegliedern 49 und 50 an. Ein ausgangsseitig am Summierglied 53 abgreifbares Stromdifferenzsignal $\Delta i = |i_2(th)| - |i_1(th)|$ ist über zwei Fensterkomparatoren 57 und 58 an eine Speicher- und Auswertlogik 59 angeschlossen, an der ausgangsseitig das Fehlersignal 17 und das Löschfreigabesignal 25 abgreifbar sind. Am Fensterkomparator 57 liegen eingangsseitig vorgebbare Stromgrenzwertsignale $+i_{G1}$ und $-i_{G1}$ und ausgangsseitig ein Signal B1 an. B1 ist = "0" für $|\Delta i| \leq i_{G1}$ und andernfalls = "1". $i_{G1}$ ist vorzugsweise = 0,1 $i_N$, $i_N$ = Nennstrom. Am Fensterkomparator 58 liegen eingangsseitig vorgebbare Stromgrenzwertsignale $+i_{G2}$ und $-i_{G2}$ und ausgangsseitig ein Signal B2 an. B2 ist = "0" für $|\Delta i| \leq i_{G2}$ und andernfalls = "1". $i_{G2}$ ist vorzugsweise = 0,3 $i_N$.

Ein weiteres monostabiles Flip-Flop 48 mit einer vorgebbaren Einschaltzeitdauer $\tau_2$ im Bereich von 5 µs - 20 µs, vorzugsweise von 10 µs, ist eingangsseitig an den Ausgang des UND-Gliedes 46 und ausgangsseitig über ein NICHT-Glied 54 mit einem Eingang eines UND-Gliedes 55 verbunden. Das UND-Glied 55 ist über einen weiteren Eingang mit dem Ausgang des UND-Gliedes 46 und ausgangsseitig über ein monostabiles Flip-Flop 56 mit einer vorgebbaren Einschaltdauer $\tau_5$ im Bereich von 5 µs - 20 µs, vorzugsweise von 10 µs, mit einem Steuereingang der Speicher- und Auswertlogik 59 verbunden. Am Ausgang des UND-Gliedes 55 tritt nach Ablauf von $\tau_2$ nur dann ein "1"-Signal auf, wenn das "1"-Ausgangssignal des UND-Gliedes 46 und damit der Stromrichter-Schaltzustand während $\tau_2$ unverändert geblieben sind. $\tau_2$ ist grösser als die Zeitdauer zum Abspeichern der Eingangssignale 18 und 21 in den Abtast-Haltegliedern 49 und 50. Ein "1"-Signal an dem Steuereingang der Speicher- und Auswertlogik 59 bedeutet, dass die Messung gültig ist und die Signale B1 und B2 zur Auswertung übernommen werden können.

Am Fehlersignalausgang der Speicher- und Auswertlogik wird dann ein Fehlersignal 17 = "1" erzeugt, wenn B1 = "1" und B2 = "0" ist, mit der Bedeutung, dass sich die Stromwandleristwerte, d. h. das Verbraucher-Stromistwertsignal 18 und des Schutz-Stromistwertsignal 20 um mehr als vorzugsweise 10 % des Nennwertes unterscheiden.

An einem Löschfreigabesignalausgang der Speicher- und Auswertlogik 59 wird dann ein Löschfreigabesignal 25 = "1" erzeugt, wenn 81 = "1" und 82 = "1" ist, mit der Bedeutung, dass sich die Stromwandleristwerte so stark unterscheiden, dass auf die Messresultate kein Verlass ist und dass die Zündimpulse für die Thyristoren T1... T4 der Stromrichter SR blockiert werden.

In Fig. 5a, die eine Verzögerungsschaltung 40 - 43 gemäss Fig. 4 im Detail zeigt, ist mit E der Eingang und mit A der Ausgang bezeichnet. Ein monostabiles Flip-Flop 61 mit der vorgebbaren Verzögerungszeit $\tau_1$ ist ein eingangsseitig dem Eingang E und ausgangsseitig über ein ODER-Glied 63 mit der Ausgang A verbunden. Ein weiteres monostabiles Flip-Flop 62 mit derselben Verzögerungszeit $\tau_1$ ist eingangsseitig über ein NICHT-Glied 60 mit dem Eingang E und ausgangsseitig mit einem zweiten Eingang des ODER-Gliedes 63 verbunden. Fig. 5b zeigt den Verlauf eines vom Zeitpunkt $t_i$ bis zum Zeitpunkt $t_j$ andauernden Eingangssignals am Eingang E in Abhängigkeit von der Zeit t und Fig. 5c die dazugehörigen Ausgangssignale am Ausgang A.

Während der Dauer der beiden Signale gemäss Fig. 5c, d.h. nach einer Änderung eines Stromrichter-Schaltzustandes, erscheint am Ausgang des NOR-Gliedes 45, vgl. Fig. 4, ein "0"-Signal. Folglich weist euch der Ausgang des UNDGliedes 46 in den Zeitintervallen $t_i$ bis $t_i + \tau_1$ und $t_j$ bis $t_j + \tau_1$ ein "0"-Signal auf.

In den Fig. 6a bis 6h sind 8 mögliche Schaltzustände Z1 bis Z8 der beiden Stromrichter SR gemäss Fig. 2 dargestellt, von denen lediglich die Zustände Z1, Z4, Z5 und Z8 vergleichbare Stromwendleristwerte liefern, d. h. im wesentlichen vom gleichen Strom, wenn auch bei den Zuständen flossen sind. Die Fig. 6a bis 6d zeigen Zustände Z1 bis Z4 mit positiver Laststromhalbwelle und die Fig. 6e bis 6h Zustände 25 bis Z8 mit negativer Laststromhalbwelle.

Die Figuren 6a und 6e zeigen Antriebs- bzw. Treibzustände Z1 und Z5 mit gezündeten Thyristoren T1 und T2 bzw. T3 und T4. Die Fig. 6d und 6h zeigen Rückspeisezustände Z4 und Z8, bei denen die Thyristoren T3 und T4 bzw. T1 und T2 Zündimpulssignale 28 = "1" und 29 = "1" bzw. 26 = "1" und 27 = "1" erhalten, aber im wesentlichen nicht stromführend sind.

Die Fig. 6b, 6c, 6f und 6g zeigen Freilaufzustände Z2, Z3, Z6 und Z7, in denen der vom Gleichstromwandler W1 erfasste Strom $i_1 = 0$ und der vom Wechselstromwandler W2 erfasste Strom $i_2 \neq 0$ ist. Würde während dieser Freilaufzustände ein Plausibilitätstest zwischen dem Schutz-Stromistwertsignal 20 von W1 und dem Verbraucher-Stromistwertsignal 18 von W2 durchgeführt, so erhielte man ein ungewolltes Fehlersignal 17. Daher müssen die Freilaufzustände vom Plausibilitätstest ausgeschlossen werden.

Beim Zustand Z2 erhalten die Thyristoren T2 und T4 Zündimpulssignale 27 = "1" und 29 = "1", beim Zustand Z3 erhalten die Thyristoren T1 und T3 Zündimpulssignale 26 = "1" und 28 = "1", beim Zustand Z6 werden Zündimpulssignale an die Thyristoren T2 und T4 geliefert und beim Zustand Z7 an die Thyristoren T1 und T3.

Im Diagramm der Fig. 7 ist der Verlauf des Stromes i für die Zustände Z1 und Z2 über die Zeit t aufgetragen, wobei der Verlauf des Stromes $i_1$ gestrichelt und der Verlauf des Stromes $i_2$ ausgezogen dargestellt sind. Vor einem Zeitpunkt $t_1$ sind die Thyristoren T1 und T2 stromführend, danach bis zum Zeitpunkt $t_2$ die Diode D4 und der Thyristor T2, anschliessend bis zum Zeitpunkt $t_3$ wieder T1 und T2 und danach D4 und T2. Nach dem Zeitpunkt $t_2$ steigt durch das Zünden des Thyristors T1 der Strom $i_1$ stark an und schwingt, bedingt durch kapazitive und induktive Elemente der Schaltung, zunächst über den Wert von $i_2$ hinaus. Durch ein solches Überschwingen könnte beim Plausibilitätstest, d. h. bei einem Vergleich von 11 mit $i_2$, ungewollt ein Fehlersignal 17 erzeugt werden. Um dies zu verhindern, wird während der Verzögerungszeit $\tau_1$, die vorzugsweise gleich der Dauer einer Schwingung von $i_1$ um den Wert von $i_2$ gewählt wird, die Durchführung des Plausibilitätstestes gesperrt. Dies erfolgt mittels Verzögerungsschaltungen gemäss Fig. 5a.

Ein Flussdiagramm für einen Plausibilitätstest ist in Fig. 8 dargestellt. Über die Zündimpulssignale 26 - 29 stehen laufende Informationen über die Zustände Z1 - Z8 der Stromrichter SR zur Verfügung und über die Stromwandler W1 und W2 über die Ströme $i_1$ und $i_2$. Es wird nun geprüft, ob nach einer Stromrichter-Zustandsänderung im Zeitpunkt $t_x$ die Verzögerungszeitdauer $\tau_1$ verstrichen ist. Falls ja, wird geprüft, ob ein vergleichbarer Stromrichter-Schaltzustand Z1 oder Z4 oder Z5 oder Z8 vorliegt. Diese Abfrage kann auch mit der vorangehenden vertauscht oder gleichzeitig mit dieser vorgenommen werden. Falls beide Abfragen mit nein zu beantworten sind wird zum Programmende gesprungen bzw. kein Vergleich ausgeführt, andernfalls werden die aktuellen Werte von $i_1$ und $i_2$ z. B. mittels des Haltesignals H in den AbtastHaltegliedern 49 und 50 gespeichert im Zeitpunkt th. Danach wird geprüft, ob der Zustand noch unverändert ist. Bei nein wird zum Programmende gesprungen, andernfalls die Stromdifferenz $\Delta i = |\, i_2(th)\, | - |\, i_1(th)\, |$ gebildet und geprüft, ob deren Betrag grösser als ein 1. Stromgrenzwert $i_{G1}$ von $\geq 0,05\, i_N$, vorzugsweise von $i_{G1} = 0,1\, i_N$ ist bzw. ob $\Delta i$ zwischen $+i_{G1}$ und $- i_{G1}$ liegt. Bei nein wird $|\Delta i|$ gespeichert als $\Delta i_{alt}$ und zum Programmende gesprungen, andernfalls geprüft, ob $|\, \Delta i\, | > i_{G2}$ ist, wobei $i_{G2} \geq 0,2\, i_N$, vorzugsweise $= 0,3\, i_N$ gewählt ist. Bei nein wird geprüft, ob $|\, \Delta i\, | > | > \Delta i_{alt}$ ist, d. h., ob die Abweichung der beiden Ströme $i_1$ und $i_2$ im Vergleich zu einem früheren Plausibilitätstest zugenommen hat. Bei nein wird $|\, \Delta i\, |$ als $\Delta i_{alt}$ gespeichert und ein Fehlersignal 17 erzeugt, das zur Anzeige des Vorhandenseins eines Fehlers von mindestens 10 % des Nennstromes $i_N$ und gegebenenfalls als Schaltsignal zur Auslösung von Schutzmassnahmen verwendet werden kann. Danach wird das Programm beendet. Falls $|\Delta i| > \Delta i_{alt}$ oder $> i_{G2}$ ist, werden die Zündimpulssignale 26 - 29 blockiert, ein Fehlersignal 17 erzeugt und der Fehler angezeigt, mit abschliessendem Programmstop. Danach kann erst nach einer Fehlerbehebung zum Start zurückgekehrt werden.

Der beschriebene Tendenzvergleich von $|\Delta i|$ mit $\Delta i_{alt}$ sowie die Anzeigen sind aus Gründen einer besseren Übersichtlichkeit in der Schaltung von Fig. 4 nicht enthalten, sie können jedoch von einem Fachmann ohne Schwierigkeiten zwischen den Fensterkomparatoren 57, 58 und der Speicher- und Auswertlogik 59 vorgesehen werden.

Der in Fig. 8 dargestellte Programmablauf kann vorzugsweise auf einem Mikroprozessor realisiert werden, wobei selbstverständlich analoge Daten vor der Eingabe digitalisiert werden müssen. Es ist vorteilhaft, für den erläuterten Plausibilitätstest denselben Mikroprozessor einzusetzen, der für die Erzeugung der Zündimpulssignale 26 - 29 verwendet wird. Dadurch wird bei einer Umrichterschaltung mit Gleichspannungszwischenkreis eine redundante Istwerterfassung ohne zusätzlichen Hardwareaufwand, d. h. ohne redundanten Aufbau der Messwerterfassungen, möglich. Die Redundanz wird durch einen zeitdiskreten Plausibilitätstest der Stromistwertsignale 20 und 18 erreicht.

Zusätzlich oder vorzugsweise anstelle der o. g. Vergleiche der Stromistwertsignale 20 und 18 der Stromwandler W1 mit denen der entsprechenden Stromwandler W2 können auch die Summe der 3 Stromistwertsignale der Stromwandler W1 und/oder der Stromwandler W2 des 3phasigen Gleichrichters und des 3-phasigen Wechselrichters gemäss Fig. 1 mit einem Stromistwertsignal des Summen-Stromwandlers WQ und/oder WV verglichen werden. Der jeweils 1.

istwertsignal des Summen-Stromwandlers WQ und/oder WV verglichen werden. Der jeweils 1. Messwert und/oder der Vergleichsmesswert können aus einer Linearkombination mehrerer Messwerte derselben Messgrösse gebildet werden. Ein Plausibilitätstest kann auch mit einem Summen-Stromwandler WQ oder WV und den Stromwandlern W1 und/oder W2 zweier Phasen eines 3-phasigen Umrichters oder von n-1 Phasen eines n-phasigen Umrichters durchgeführt werden. Falls für jede der 3 Phasen des Umrichters Stromwandler W1 und W2 vorgesehen sind, können die Summen-Stromwandler WQ und WV entfallen.

Eine Redundanz bei der Erfassung der Zwischenkreisspannung des in Fig. 1 dargestellten Umrichters ist durch einen Vergleich der Ausgangssignale der zur Messung der Spannung verwendeten Stromwandler WU1 und WU2 möglich. Fällt nur eines der beiden Ausgangssignale aus, so kann der Fehler in dem defekten Messwerterfassungskreis gesucht werden, ohne den Umrichter abschalten zu müssen.

Auf ähnliche Weise können andere Messgrössen, wie Widerstand, Temperatur, Lichtstärke, radioaktive Strahlung, pH-Wert usw. redundant erfasst und die Messwerte mittels eines Plausibilitätstestes verglichen werden.

## Patentansprüche

1. Fehlerschutzverfahren für eine elektrische Anordnung,

a) bei dem mindestens ein 1. Messwert ($i_1$) einer Messgrösse

b) und mindestens ein Vergleichsmesswert ($i_2$) derselben Messgrösse

c) mindestens in vorgebbaren Zeitabschnitten redundant erfasst werden,

d) wobei ein Vergleich des mindestens einen 1. Messwertes ($i_1$) mit dem mindestens einen redundanten Vergleichsmesswert ($i_2$) mindestens während dieser vorgebbaren Zeitabschnitte durchgeführt wird und

e) ein Fehlersignal (17) erzeugt wird, wenn der Betrag dieses mindestens einen 1. Messwertes ($i_1$) von dem Betrag dieses mindestens einen Vergleichsmesswertes ($i_2$) um mehr als einen vorgebbaren 1. Grenzwert ($i_{G1}$) abweicht, dadurch gekennzeichnet,

f) dass das Fehlersignal (17) und ein zusätzliches Abschaltsignal (25) erzeugt werden, wenn der Betrag dieser Abweichung ($\Delta i$) grösser als ein vorgebbarer 2. Grenzwert ($i_{G2}$) ist, welcher grösser als dieser 1. Grenzwert ($i_{G1}$) ist, oder

g) wenn der Betrag dieser Abweichung ($\Delta i$) im Vergleich zum Betrag mindestens einer zeitlich vorher erfassten Abweichung ($\Delta i_{alt}$) eine ansteigende Tendenz aufweist.

2. Fehlerschutzverfahren nach Anspruch 1, dadurch gekennzeichnet,

a) dass der 1. Grenzwert ($i_{G1}$) grösser oder gleich 5 % des Nennwertes ($i_N$) der Messgrösse ist und

b) insbesondere, dass der 2. Grenzwert ($i_{G2}$) grösser oder gleich 20 % des Nennwertes ($i_N$) der Messgrösse ist.

3. Fehlerschutzverfahren nach einem der Ansprüche 1 bis 3, dadurch gekennzeichnet,

a) dass der 1. Messwert ($i_1$) aus einer Linearkombination mehrerer Messwerte derselben Messgrösse gebildet wird und/oder

b) dass der Vergleichsmesswert ($i_2$) aus einer Linearkombination mehrerer Messwerte derselben Messgrösse gebildet wird.

4. Fehlerschutzverfahren nach einem der Ansprüche 1 bis 3, dadurch gekennzeichnet,

a) dass die Messwerte Strom-($i_1$, $i_2$) und/oder Spannungsmesswerte eines Stromrichters (SR) sind,

b) insbesondere eines Umrichters mit einem Gleichspannungszwischenkreis, und

c) dass die Strom-($i_1$, $i_2$) und/oder Spannungsmesswerte zusätzlich je für sich auf Grenzwertüberschreitungen ($\pm i_G$) überwacht werden, wobei in Abhängigkeit von mindestens einer Grenzwertüberschreitung ein Ausschaltsignal (9) und gegebenenfalls ein Grenzwertüberschreitungssignal (19) erzeugt werden.

5. Fehlerschutzverfahren nach Anspruch 4, dadurch gekennzeichnet, dass die Überwachung des Betrags der Abweichung ($\Delta i$) zwischen dem mindestens einen 1. Messwert ($i_1$) und dem mindestens einen redundanten Vergleichsmesswert ($i_2$) auf mindestens eine Grenzwertüberschreitung ($i_{G1}$, $i_{G2}$) in Abhängigkeit von mindestens einem Stromrichter-Schaltzustand (Z1 - Z8) und/oder vom Ablauf einer vorgebbaren Verzögerungszeitdauer ($\tau_1$) seit Beginn eines Schaltzustandes durchgeführt wird, insbesondere, dass die Verzögerungszeitdauer im Bereich von 80 μs - 180 μs liegt.

6. Fehlerschutzschaltung zur Durchführung des Fehlerschutzverfahrens nach Patentanspruch 1,

a) mit mindestens einem 1. Messgerät (W1, WU1) zur Erzeugung eines 1. Messwertsignals ($i_1$) von einer Messgrösse und

b) mit mindestens einem 2. Messgerät (W2, WU2) für eine redundante Erfassung derselben Messgrösse, welches 2. Messgerät ein Vergleichsmesswertsignal ($i_2$) erzeugt,

c) welches 2. Messgerät mindestens in vorgebbaren Zeitabschnitten dieselbe Messgrösse wie das 1. Messgerät erfasst,

d) mit einem Differenzbildner (5, 53), der in Abhängigkeit von der Differenz des Betrags des 1. Messwertsignals ($i_1$) und des Betrags des Vergleichsmesswertsignals ($i_2$) ein Diffe-

renzsignal (Δi) erzeugt und

e) einem 1. Vergleicher (5, 57), der dieses Differenzsignal (Δi) mindestens während dieser vorgebbaren Zeitabschnitte mit mindestens einem 1. Grenzwertsignal (i$_{G1}$) für dieses Differenzsignal (Δi) vergleicht und im Falle einer Grenzwertüberschreitung ein Fehlersignal (17) erzeugt, dadurch gekennzeichnet,

f) dass mindestens ein 2. Vergleicher (5, 58) vorgesehen ist, der das Differenzsignal (Δi) auf Überschreiten eines vorgebbaren 2. Grenzwertsignals (i$_{G2}$) überwacht, welches 2. Grenzwertsignal betragsmässig grösser als das 1. Grenzwertsignal (i$_{G1}$) ist,

g) dass mindestens ein Speicherglied (5, 59) zum Speichern des Differenzsignals (Δi) vorgesehen ist,

h) welches im Falle, dass der Betrag des Differenzsignals (Δi) grösser als das 2. Grenzwertsignal (i$_{G2}$) ist, ein Abschaltsignal (25) erzeugt

i) und welches weiter im Falle, dass der Betrag des Differenzssignals (Δi) kleiner oder gleich dem 2. Grenzwertsignal, aber grösser als das 1. Grenzwertsignal (i$_{G1}$) ist, nur dann ein Abschaltsignal (25) erzeugt, wenn der Betrag des Differenzsignals (Δi) grösser ist als der Betrag eines gespeicherten, zeitlich früher erfassten Differenzsignals (Δi$_{alt}$) und

j) dass je ein Betragsglied (51, 52) zur Bildung des Betrags des 1. Messwertsignals (i$_1$) und des mindestens einen Vergleichswertmeßsignals (i$_2$) vorgesehen und dem Differenzbildner (53) vorgeschaltet ist.

7. Fehlerschutzschaltung nach Anspruch 6, dadurch gekennzeichnet,

a) dass die Fehlerschutzschaltung eine Schutzschaltung eines n-Quadranten-Stromrichters, n = 1 - 4,

b) insbesondere eines Umrichters mit Gleichspannungszwischenkreis mit abschaltbaren Thyristoren (T1 - T4) als Stromventilen ist,

c) dass die Messgeräte Strommesser und/oder Spannungsmesser, insbesondere dass sie Stromwandler sind,

d) dass die Messgeräte ausgangsseitig über eine Logikschaltung (5, 38 - 59) mit Vergleichseinrichtungen miteinander in Wirkverbindung stehen und

e) dass in Abhängigkeit vom Auftreten des Abschaltsignals (25) am Ausgang der Logikschaltung (5, 38 - 59) die Zündsignale (26 - 29) für die Stromrichterthyristoren (T1 - T4) blockierbar sind.

8. Fehlerschutzschaltung nach Anspruch 7, dadurch gekennzeichnet,

a) dass mindestens ein 1. Strommesser (W1) ausgangsseitig über eine Stromschutzschaltung (3) und

b) dass mindestens ein 2. Vergleichsstrommesser (W2) über einen Momentanstrombegrenzer (2) mit der Logikschaltung (5, 38 - 59) in Wirkverbindung stehen und/oder

c) dass mindestens ein 1. Spannungsmesser (WU1) über eine Spannungs-Schutzschaltung (4) und

d) mindestens ein 2. Vergleichsspannungsmesser (WU2) direkt mit der Logikschaltung (5) in Wirkverbindung stehen,

e) dass die Stromschutzschaltung (3) in Abhängigkeit von einem vorgebbaren 3. Stromgrenzwert (i$_G$) und/oder

f) die Spannungsschutzschaltung (4) in Abhängigkeit von einem vorgebbaren Spannungsgrenzwert ein Ausschaltsignal (9) für die Stromversorgung (S1, S2, S3) mindestens eines Stromrichters (SR) erzeugen.

**Claims**

1. Fault protection method for an electrical arrangement,

a) in which at least one first measurement value (i$_1$) of a measurement variable

b) and at least one reference measurement value (i$_2$) of the same measurement variable

c) are redundantly detected at least in predeterminable time intervals,

d) wherein a comparison of the at least one first measurement value (i$_1$) with the at least one redundant reference measurement value (i$_2$) is carried out at least during these predeterminable time intervals and

e) a fault signal (17) is generated when the amount of this at least one first measurement value (i$_1$) deviates from the amount of this at least one reference measurement value (i$_2$) by more than a predeterminable first limit value (i$_{G1}$), characterised in that,

f) the fault signal (17) and an additional switch-off signal (25) are generated when the amount of this deviation (Δi) is greater than a predeterminable second limit value (i$_{G2}$) which is greater than this first limit value (i$_{G1}$), or

g) when the amount of this deviation (Δi) exhibits a rising trend in comparison with the amount of at least one deviation (Δi$_{alt}$) which has been detected previously in time.

2. Fault protection method according to claim 1, characterised in that,

a) the first limit value (i$_{G1}$) is greater than or equal to 5 % of the nominal value (i$_N$) of the measurement variable and

b) in particular, the second limit value (i$_{G2}$) is greater than or equal to 20 % of the nominal value (i$_N$) of the measurement variable.

3. Fault protection method according to claim 1 or 2, characterised in that,

a) the first measurement value (i$_1$) is formed from a linear combination of several measurement values of the same measurement variable and/or

b) the reference measurement value ($i_2$) is formed from a linear combination of several measurement values of the same measurement variable.

4. Fault protection method according to one of claims 1 to 3, characterised in that,

a) the measurement values are current ($i_1$, $i_2$) and/or voltage measurement values of a static converter (SR),

b) in particular, of a converter with a direct-voltage link circuit, and

c) the current ($i_1$, $i_2$) and/or voltage measurement values are additionally in each case separately monitored for limit-value transgressions ($i_G$), a switch-off signal (9) and, if necessary, a limit-value transgression signal (19) being generated in dependence on at least one limit-value transgression.

5. Fault protection method according to claim 4, characterised in that the monitoring of the amount of the deviation ($\Delta i$) between the at least one first measurement value ($i_1$) and the at least one redundant reference measurement value ($i_2$) for at least one limit-value transgression ($i_{G1}$, $i_{G2}$) is carried out in dependence on at least one static converter switching state (Z1 - Z8) and/or on the expiration of a predeterminable delay time period ($\tau_1$) from the beginning of a switching state, in particular that the delay time period is within the range of 80 μs - 180 μs.

6. Fault protection circuit for carrying out the fault protection method according to Patent Claim 1,

a) comprising at least one first measurement device (W1, WU1) for generating a first measurement value signal ($i_1$) from a measurement variable and

b) comprising at least one second measuring device (W2, WU2) for a redundant detection of the same measurement variable, which second measuring device generates a reference measurement value signal ($i_2$),

c) which second measuring device detects the same measurement variable as the first measuring device at least in predeterminable time intervals,

d) comprising a difference-forming circuit (5, 53) which generates a difference signal ($\Delta i$) in dependence on the difference of the amount of the first measurement value signal ($i_1$) and the amount of the reference measurement value signal ($i_2$), and

e) comprising a first comparator (5, 57) which compares this difference signal ($\Delta i$) with at least one first limit value signal ($i_{G1}$) for this difference signal ($\Delta i$) at least during these predeterminable time intervals and generates a fault signal (17) in the case of a limit-value transgression, characterised in that

f) at least one second comparator (5, 58) is provided, which monitors the difference signal ($\Delta i$) for transgression of a predeterminable second limit-value signal ($i_{G2}$), the amount of which second limit-value signal is greater than that of the first limit-value signal ($i_{G1}$),

g) at least one storage element (5, 59) for storing the difference signal ($\Delta i$) is provided

h) which generates a switch-off signal (25) in the case where the amount of the difference signal ($\Delta i$) is greater than the second limit-value signal ($i_{G2}$),

i) and which, in the case where the amount of the difference signal ($\Delta i$) is less than or equal to the second limit-value signal, but greater than the first limit-value signal ($i_{G1}$) furthermore generates a switch-off signal (25) only when the amount of the difference signal ($\Delta i$) is greater than the amount of a stored difference signal ($\Delta i_{alt}$) which has been detected earlier in time

j) one amount element (51, 52) each for forming the amount of the first measurement value signal ($i_1$) and of the at least one reference measurement value signal ($i_2$) is provided and is connected upstream of the difference-forming circuit (53).

7. Fault protection circuit according to claim 6, characterised in that

a) the fault protection circuit is a protection circuit of an n-quadrant static converter, n = 1 - 4,

b) in particular of a converter with direct-voltage link circuit with gate turn-off thyristors (T1 - T4) as current valves,

c) the measuring devices are current meters and/or voltage meters, in particular that they are current transformers,

d) the outputs of the measuring devices are effectively connected to one another via a logic circuit (5, 38 - 59) with comparing devices, and

e) the firing signals (26 - 29) for the static converter thyristors (T1 - T4) can be blocked in dependence on the occurrence of the switch-off signal (25) at the output of the logic circuit (5, 38 - 59).

8. Fault protection circuit according to claim 7, characterised in that

a) the logic circuit (5, 38 - 59) is effectively connected to the output of at least one first current meter (W1) via a current protection circuit (3) and

b) to at least one second reference current meter (W2) via an instantaneous current limiter (2) and/or

c) the logic circuit (5) is effectively connected to at least one first voltage meter (WU1) via a voltage protection circuit (4) and

d) directly to at least one second reference voltage meter (WU2),

e) the current protection circuit (3), in dependence on a predeterminable third current limit value ($i_G$), and/or

f) the voltage protection circuit (4), in dependence on a predeterminable voltage limit value, generate a switch-off signal (9) for the power supply (S1, S2, S3) of at least one static converter (SR).

**Revendications**

1. Procédé de protection contre les défauts pour un dispositif électrique, suivant lequel on détecte:

a) au moins une première valeur de mesure ($i_1$) d'une grandeur de mesure;

b) et au moins une valeur de mesure de comparaison ($i_2$) de la même grandeur de mesure;

c) avec redondance au moins dans des intervalles de temps prédéterminables;

d) une comparaison entre la première valeur de mesure au moins unique ($i_1$) et la valeur de mesure de comparaison redondante au moins unique ($i_2$) étant effectuée au moins pendant ces intervalles de temps prédéterminés, et

e) un signal de défaut (17) étant produit si la valeur absolue de cette première valeur de mesure au moins unique ($i_1$) diffère de la valeur absolue de ladite valeur de mesure de comparaison au moins unique ($i_2$) de plus d'une première valeur limite prédéterminable ($i_{G1}$); caractérisé en ce que :

f) le signal de défaut (17) et un signal de déclenchement supplémentaire (25) sont produits lorsque la valeur absolue de cette différence ($\Delta i$) est supérieure à une deuxième valeur limite prédéterminable ($i_{G2}$) qui est supérieure à la première valeur limite ($i_{G1}$), ou

g) lorsque la valeur absolue de cette différence ($\Delta i$) présente une tendance à l'accroissement lorsqu'elle est comparée à la valeur absolue d'au moins une différence ($\Delta i_{alt}$) détectée précédemment.

2. Procédé de protection contre les défauts suivant la revendication 1, caractérisé en ce que:

a) la première valeur limite ($i_{G1}$) est supérieure ou égale à 5% de la valeur nominale ($i_N$) de la grandeur de mesure, et

b) en particulier en ce que la deuxième valeur limite ($i_{G2}$) est supérieure ou égale à 20% de la valeur nominale ($i_N$) de la grandeur de mesure.

3. Procédé de protection contre les défauts suivant la revendication 1 ou 2, caractérisé en ce que:

a) la première valeur de mesure ($i_1$) est formée par une combinaison linéaire de plusieurs valeurs de mesure de la même grandeur de mesure et/ou

b) que la valeur de mesure de comparaison ($i_2$) est formée d'une combinaison linéaire de plusieurs valeurs de mesure de la même grandeur de mesure.

4. Procédé de protection contre les défauts suivant l'une quelconque des revendications 1 à 3, caractérisé en ce que:

a) les valeurs de mesure sont des valeurs de mesure d'intensité ($i_1$, $i_2$) et/ou de tension d'un redresseur de courant (SR);

b) en particulier, d'un mutateur à circuit intermédiaire à tension continue, et

c) que les valeurs de mesure d'intensité ($i_1$, $i_2$) et/ou de tension sont surveillées, en outre, individuellement pour détecter les dépassements de valeurs limites ($\pm i_G$), un signal de déclenchement (9) et éventuellement un signal de dépassement de valeur limite (19) étant produits en fonction d'au moins un dépassement de valeur limite.

5. Procédé de protection contre les défauts suivant la revendication 4, caractérisé en ce que la surveillance de la valeur absolue de la différence ($\Delta i$) entre la première valeur de mesure au moins unique ($i_1$) et la valeur de mesure de comparaison redondante au moins unique ($i_2$) pour détecter au moins un dépassement de valeur limite ($i_{G1}$, $i_{G2}$) est effectuée en fonction d'au moins un état de commutation du redresseur de courant (Z1 - Z8) et/ou de l'écoulement d'une durée de retard prédéterminable ($\tau_1$) depuis le début d'un état de commutation, en particulier, en ce que la durée de retard est comprise dans la gamme de 80 µs à 180 µs.

6. Circuit de protection contre les défauts pour mettre en oeuvre le procédé de protection contre les défauts suivant la revendication 1, qui comprend:

a) au moins un premier appareil de mesure (W1, WU1) pour produire un premier signal de valeur de mesure ($i_1$) d'une grandeur de mesure, et

b) au moins un deuxième appareil de mesure (W2, WU2) pour une détection redondante de la même grandeur de mesure, ce deuxième appareil de mesure produisant un signal de valeur de comparaison ($i_2$);

c) ledit deuxième appareil de mesure détectant au moins pendant des intervalles de temps prédéterminables les mêmes grandeurs de mesure que le premier appareil de mesure;

d) un générateur de différence (5, 53) qui produit un signal de différence ($\Delta i$) en fonction de la différence entre la valeur absolue du premier signal de valeur de mesure ($i_1$) et la valeur absolue du signal de valeur de mesure de comparaison ($i_2$), et

e) un premier comparateur (5, 57) qui compare ce signal de différence ($\Delta i$) au moins pendant ces intervalles de temps prédéterminables à au moins un premier signal de valeur limite ($i_{G1}$) pour ce signal de différence ($\Delta i$) et

EP 0 179 262 B1

19

produit un signal de défaut (17) en cas de dépassement d'une valeur limite; caractérisé en ce que:

f) au moins un deuxième comparateur (5, 58) est prévu pour surveiller le signal de différence ($\Delta$i) afin de détecter un dépassement d'un deuxième signal de valeur limite prédéterminable (i$_{G2}$), ledit deuxième signal de valeur limite étant supérieur au premier signal de valeur limite (i$_{G1}$) en valeur absolue;

g) qu'au moins une mémoire (5, 59) servant à enregistrer le signal de différence ($\Delta$i) est prévue;

h) pour produire un signal de déclenchement (25) dans le cas où la valeur absolue du signal de différence ($\Delta$i) est supérieure au deuxième signal de valeur limite (i$_{G2}$);

i) et pour, en outre, au cas où la valeur absolue du signal de différence ($\Delta$i) est inférieure ou égale au deuxième signal de valeur limite, mais supérieure au premier signal de valeur limite (i$_{G1}$), ne produire un signal de déclenchement (25) que si la valeur absolue du signal de différence ($\Delta$i) est supérieure à la valeur absolue d'un signal de différence ($\Delta$i$_{alt}$) détecté précédemment et enregistré, et

j) qu'un élément à valeur absolue (51, 52) est prévu chaque fois pour former la valeur absolue du premier signal de valeur de mesure (i$_1$) et du signal de valeur de mesure de comparaison (i$_2$) et est monté en amont du générateur de différence (53).

7. Circuit de protection contre les défauts suivant la revendication 6, caractérisé en ce que:

a) le circuit de protection contre les défauts est un circuit de protection d'un redresseur de courant à n quadrants, n = 1 - 4;

b) en particulier d'un mutateur à circuit intermédiaire à tension continue avec des thyristors (T1 - T4) déclenchables servant de valves électriques;

c) que les appareils de mesure sont des ampèremètres et/ou des voltmètres, en particulier, qu'ils sont des convertisseurs de courant;

d) que les appareils de mesure sont en liaison mutuelle active du côté de la sortie, par l'intermédiaire d'un circuit logique (5, 38 - 59) avec des dispositifs de comparaison;

e) que les signaux d'allumage (26 - 29) pour les thyristors du redresseur de courant (T1 - T4) peuvent être bloqués en fonction de l'apparition du signal de déclenchement (25) à la sortie du circuit logique (5, 38 - 59).

8. Circuit de protection contre les défauts suivant la revendication 7, caractérisé en ce que:

a) au moins un premier ampèremètre (W1) est en liaison active, par l'intermédiaire d'un circuit de protection en intensité (3), et

b) qu'au moins un deuxième ampèremètre de comparaison (W2) est en liaison active par l'intermédiaire d'un limitateur d'intensité ins-

20

tantanée (2), avec le circuit logique (5, 38 - 59) et/ou

c) qu'au moins un premier voltmètre (WU1) est en liaison active, par l'intermédiaire d'un circuit de protection en tension (4), et

d) qu'au moins un deuxième voltmètre de comparaison (WU2) est en liaison active, directement avec le circuit logique (5);

e) que le circuit de protection en intensité (3), en fonction d'une troisième valeur limite d'intensité prédéterminable (i$_G$) et/ou

f) le circuit de protection en tension (4), en fonction d'une valeur limite de tension prédéterminable, produisent un signal de déclenchement (9) pour l'alimentation électrique (S1, S2, S3) d'au moins un redresseur de courant (SR).

11

FIG.1

FIG.2

FIG. 3

FIG. 4

FIG. 5a

FIG. 5b

FIG. 5c

FIG.6a

FIG.6b

FIG.6c

FIG.6d

FIG.6e

FIG.6f

FIG.6g

FIG.6h

FIG.7

START

Laufende Informationen
über SR-Schaltzustand, $i_1$, $i_2$ ——— Schaltzustand Z1-Z8, Fig.6a-6h

nein

$t - t_x > \tau_1$ ——— kann der Test ausgeführt werden ?

ja

nein

vergleichbarer
SR-Schaltzustand? ——— Schaltzustand Z1, Z4, Z5, Z8 ?

ja

$i_1(th) := i_1$ ; $i_2(th) := i_2$ ——— Speichern von $i_1$ und $i_2$ im Zeitpunkt th
Abtast-Halteglieder in Halte-Position

——— Abtast-Halteglieder in Abtastposition

SR-Schaltzustand
unverändert
nein

ja

$\Delta i = |i_2(th)| - |i_1(th)|$

$|\Delta i| > i_{G1}$   nein

ja

$\Delta i_{alt} := |\Delta i|$

$|\Delta i| > i_{G2}$   nein

ja              ja

$|\Delta i| > \Delta i_{alt}$

Blockierung der Zündimpulse

nein

$\Delta i_{alt} := |\Delta i|$

Fehleranzeige

Anzeige
$|\Delta i| > i_{G1}$

STOP

ENDE

FIG.8